Europäisches Patentamt

European Patent Office

Office européen des brevets

(19)

(11) Numéro de publication : **0 248 798 B1**

# (12) FASCICULE DE BREVET EUROPEEN

(45) Date de publication du fascicule du brevet :
**05.06.91 Bulletin 91/23**

(51) Int. Cl.⁵ : **H02K 15/16,** H02K 21/24, H02K 1/30

(21) Numéro de dépôt : **86901031.4**

(22) Date de dépôt : **21.02.86**

(86) Numéro de dépôt international :
**PCT/CH86/00024**

(87) Numéro de publication internationale :
**WO 87/03750 18.06.87 Gazette 87/13**

(54) **MOTEUR ELECTRIQUE SYNCHRONE A ROTOR AIMANTE ET PROCEDE DE FABRICATION DE CE MOTEUR.**

(30) Priorité : **06.12.85 CH 5192/85**

(43) Date de publication de la demande :
**16.12.87 Bulletin 87/51**

(45) Mention de la délivrance du brevet :
**05.06.91 Bulletin 91/23**

(84) Etats contractants désignés :
**AT BE DE FR GB IT NL SE**

(56) Documents cités :
**WO-A-50/2503**
**DE-A-13 137 981**
**DE-B- 1 282 157**
**NL-B- 134 599**
**US-A- 2 797 346**
**US-A- 3 176 380**
**US-A- 3 300 666**

(73) Titulaire : **PORTESCAP**
**Rue Jardinière 157**
**CH-2300 La Chaux-de-Fonds (CH)**

(72) Inventeur : **OUDET, Claude**
**12, rue du Capitaine Arrachart**
**F-25000 Besançon (FR)**
Inventeur : **DREY, Gilbert**
**55, rue Jacob-Brandt**
**CH-2300 La Chaux-de-Fonds (CH)**
Inventeur : **VEIGNAT, Norbert**
**6, rue Denis-Papin**
**F-25000 Besançon (FR)**

(74) Mandataire : **Hranitzky, Wilhelm Max et al**
**c/o WILLIAM BLANC & CIE 9, rue du Valais**
**CH-1202 Genève (CH)**

EP 0 248 798 B1

Jouve, 18, rue Saint-Denis, 75001 PARIS

## Description

La présente invention concerne un moteur électrique synchrone comportant au moins une partie de rotor de forme essentiellement annulaire plate, aimantée de façon à présenter au moins une série de pôles magnétiques disposés régulièrement le long d'une zone annulaire plane, ladite partie de rotor étant fixée par l'intermédiaire d'au moins une partie de support de rotor sur un arbre du moteur monté de façon rotative par rapport à au moins un ensemble de stator, l'ensemble de stator comportant au moins deux parties de stator en un matériau magnétiquement perméable formant, étant solidaires de ou étant couplées avec des parties polaires agencées de manière à former, dans leur ensemble, un entrefer variable le long d'au moins une portion d'un espace annulaire dans lequel sont disposés les pôles magnétiques de la partie de rotor, l'ensemble de stator comportant en outre au moins une bobine électrique de commande couplée avec une ou plusieurs desdites parties polaires. Un tel moteur est décrit par exemple dans la demande de brevet internationale No WO 85/02503.

L'invention vise à fournir un moteur du type susmentionné dont la conception, tout en utilisant des éléments usuels tels que des roulements à billes standard pour le montage de l'arbre du moteur par rapport à l'ensemble de stator, facilite la fabrication de ce moteur en particulier lors de l'assemblage, et permet d'atteindre de façon simple et économique une très bonne précision dans le positionnement de la partie de rotor par rapport à l'ensemble de stator.

A cet effet, le moteur selon l'invention est caractérisé en ce que la fixation de la partie de rotor sur la partie de support de rotor est réalisée de façon à permettre, lors de l'assemblage du moteur, un positionnement de la partie de rotor dans le sens axial ainsi qu'un positionnement angulaire de celle-ci par rapport à la direction de l'axe du moteur.

De préférence, l'ensemble de stator comporte des parties de stator séparées faisant partie d'un même circuit magnétique, l'ensemble de stator étant agencé de façon à permettre, lors de l'assemblage du moteur, un positionnement des parties de stator l'une par rapport à l'autre dans le sens axial. Dans ce cas, les parties de stator faisant partie d'une même circuit magnétique peuvent être reliées entre elles, directement ou par l'intermédiaire d'une partie de culasse, de manière à former un joint magnétique constitué par des surfaces de contact parallèles à l'axe de l'arbre du moteur. Plus particulièrement, l'ensemble de stator peut être formé par deux parties de stator annulaires coaxiales, de même forme, présentant chacune au moins une première et une seconde portion de paroi cylindrique, le diamètre intérieur de la première portion de paroi étant égal au diamètre extérieur de la deuxième, les deux parties de stator étant réunies de façon à s'emboîter l'une dans l'autre par lesdites premières et secondes portions de paroi respectives.

L'invention s'applique plus particulièrement à un moteur dans lequel la partie de rotor se présente sous forme d'un disque annulaire de faible épaisseur par rapport à son diamètre extérieur et est aimanté axialement, et l'ensemble de stator comporte des parties polaires disposées de part et d'autre de la partie de rotor.

De préférence, l'ensemble de stator et/ou la partie de support de rotor comportent au moins une ouverture d'accès communiquant avec l'espace d'air entre la partie de rotor et les parties polaires, cette ouverture étant accessible de l'extérieur de l'ensemble de stator assemblé avec l'arbre du moteur muni de la partie de rotor.

L'invention a également pour objet un procédé de fabrication d'un tel moteur, selon lequel on assemble d'abord l'arbre du moteur muni de la partie de support de rotor avec un ensemble de parties polaires devant être disposées en regard d'une zone annulaire plane correspondante de la partie de rotor respective, de telle façon que les extrémités de ces parties polaires, dans le sens axial, soient disposées dans un plan perpendiculaire à l'axe de l'arbre du moteur, que l'on met en place la partie de rotor annulaire en disposant au moins une pièce d'espacement d'épaisseur déterminée entre celle-ci et les extrémités d'au moins une partie desdites parties polaires, que l'on fixe la partie de rotor sur le support de rotor et que l'on procède au retrait ou à l'enlèvement de la pièce d'espacement de l'espace entre la partie de rotor et lesdites parties polaires. Plus particulièrement, la pièce d'espacement peut être une feuille de matière plastique thermo-rétractable, une feuille en une matière apte à être dissoute dans un solvant chimique ou un fil métallique de forme essentiellement circulaire.

D'autres particularités de l'invention ressortiront des revendications formulées et de la description donnée ci-après de différentes formes d'exécution indiquées à titre d'exemples et illustrées dans le dessin annexé dans lequel :

la figure 1 est une vue en coupe axiale d'une première forme d'exécution du moteur selon l'invention,

la figure 2 est une vue en coupe axiale d'une forme d'exécution similaire à celle de la figure 1,

la figure 3 est une vue en coupe partielle selon la ligne III-III de la figure 2,

la figure 4 est une vue en coupe axiale d'une autre forme d'exécution du moteur, et

la figure 5 est une vue partiellement en coupe selon la ligne V-V de la figure 4.

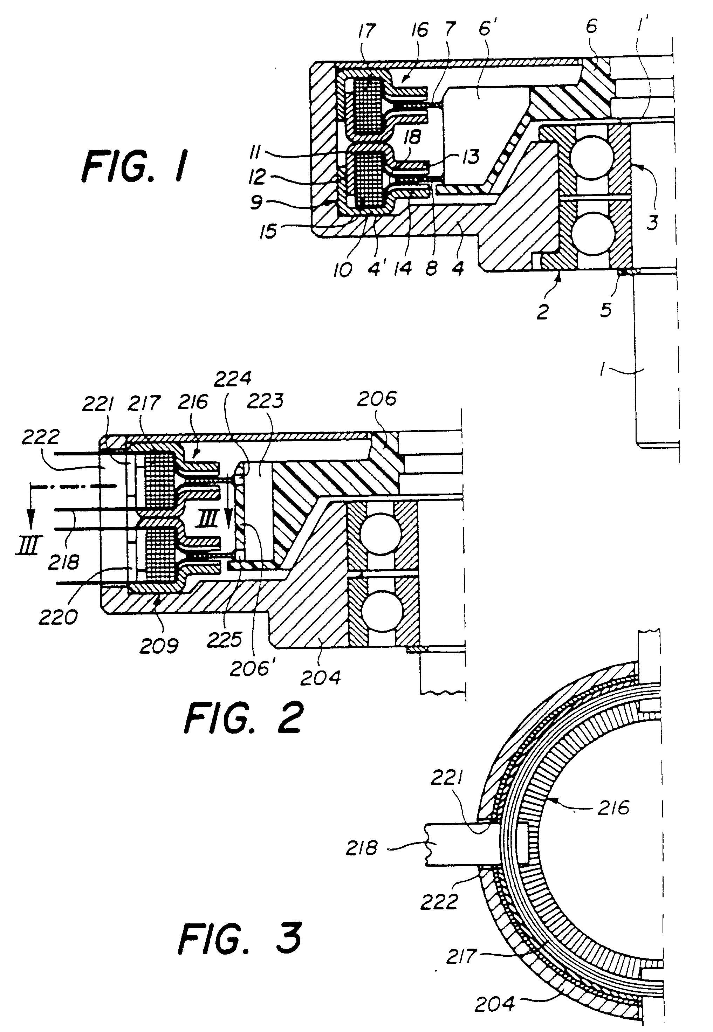

La figure 1 illustre une première forme d'exécution d'un moteur diphasé, comportant deux étages, chaque étage représentant une des phases du moteur.

Un arbre 1 du moteur est monté de façon rotative, au moyen de deux roulements à bille 2, 3, dans un support de stator 4. Pour éviter un jeu axial de l'arbre, on rattrape le jeu axial des roulements à bille et on soude la bague intérieure de ceux-ci sur l'arbre ou on fixe l'arbre au moyen d'un circlips 5 et de rondelles de calage non représentées, disposées entre celui-ci et la bague intérieure voisine du roulement 2. Un épaulement 1' de l'arbre 1 sert d'appui à la bague intérieure du roulement 3.

Une partie de support de rotor 6 en matière plastique est rendue solidaire de l'arbre 1 par exemple par surmoulage comme le montre la figure 1. Cette partie de support de rotor présente un certain nombre de nervures 6', par exemple au nombre de douze, dont les parties périphériques s'inscrivent dans une surface cylindrique coaxiale par rapport à l'arbre 1. Deux parties de rotor 7, 8 en forme de disque mince annulaire sont fixées par collage sur les parties périphériques des nervures 6', le positionnement de ces parties de rotor étant décrit plus en détail ci-après. Les deux disques annulaires 7 et 8 sont réalisés, d'une manière bien connue, en un matériau aimantable tel que le samarium-cobalt, et ils sont aimantés axialement de façon à présenter sur chacune de leurs surfaces planes des pôles magnétiques, par exemple des pôles dont la polarité alterne dans le sens périphérique du disque.

Le support de stator 4 présente une surface de référence annulaire 4' qui est plane et située dans un plan perpendiculaire à l'axe de l'arbre 1 monté dans le support de stator. Un premier ensemble de stator 9 comporte une partie de stator inférieure 10 et une partie de stator supérieure 11 en un matériau magnétiquement perméable, ces deux parties de stator ayant une forme annulaire et présentant une surface de contact cylindrique 12 parallèle à l'axe de l'arbre du moteur de façon à former un joint magnétique entre les parties 10 et 11. Les parties intérieures 13, 14 des parties de stator constituent des ensembles de parties polaires espacées axialement et présentent ainsi dans le sens de la circonférence un profil denté de manière à former entre les parties 13 et 14 un entrefer de hauteur variable.

Une bobine électrique de commande 15 de forme annulaire est disposée entre les parties de stator 10 et 11 de manière à être couplée avec les parties polaires correspondantes.

Un deuxième ensemble de stator 16 est agencé de façon tout à fait analogue à l'ensemble de stator 9 et comporte une bobine électrique de commande 17. Les parties de rotor 7 et 8 sont disposées respectivement dans les entrefers formés par les ensembles de stator 16 et 9.

On voit également sur la figure 1 que l'ensemble de stator 16 respose sur l'ensemble de stator 9, une surface de contact annulaire plane étant prévue pour définir la position et surtout l'orientation perpendiculaire à l'axe de l'arbre 1 de l'ensemble de stator 16. Le support de stator 4 comporte une paroi latérale dont la surface cylindrique intérieure permet le centrage des ensembles de stator par rapport à l'arbre du moteur. Enfin, un couvercle 17 reposant sur l'ensemble de stator 16 et fermant le boîtier constitué par le support de stator 4, est visible sur la figure 1.

Lors de l'assemblage du moteur, on monte d'abord l'arbre 1 muni de la partie de support de rotor 6, dans le support de stator 4 de la manière déjà mentionnée ci-dessus. On pose ensuite la partie de stator inférieure 10 de l'ensemble de stator 9 sur la surface de référence 4' et l'on pose sur les crêtes de la denture de la partie 14 une feuille en une matière plastique thermorétractable 18 qui peut avoir une forme annulaire et présente une épaisseur déterminée, par exemple de sept centièmes de millimètre. Une telle matière thermorétractable est par exemple le PVC ordinaire.

On pose ensuite la bobine 15 sur la partie inférieure 10 de l'ensemble de stator et la feuille 18 placée dans le fond de celle-ci. Puis on pose la partie de rotor inférieure 8 sur les crêtes de la denture de la partie 14 sur lesquelles est posée la feuille 18. La partie de rotor 8 peut à cet effet se déplacer librement le long de la partie de support 6, c'est-à-dire le long des parties périphériques des nervures 6', par rapport auxquelles elle se trouve centrée. La feuille de séparation 18 détermine ainsi par son épaisseur la distance axiale entre la partie de rotor 8 et la partie 14 et elle assure en outre que la partie de rotor soit disposée parallèlement à la surface de référence 4' donc perpendiculairement à l'axe de l'arbre du moteur.

On replie ensuite la feuille 18 autour de la bobine 15 de telle façon que le bord de la feuille 18 soit placé sur la surface supérieure de la partie de rotor 8. On pose enfin la partie supérieure 11 de l'ensemble de stator 9 sur la feuille 18 recouvrant la bobine 15 et la partie de rotor 8. La feuille 18 détermine ainsi l'espacement axial entre la partie de rotor 8 et la partie 13 de l'ensemble de stator. Dans cette position, on colle ou on fixe par un autre moyen la partie de rotor 8 sur la partie de support de rotor 6 et l'on fixe également, par exemple par collage ou par soudure, les deux parties de stator 10 et 11 l'une par rapport à l'autre et par rapport au support de stator 4.

L'ensemble de stator supérieur 16 et la partie de rotor correspondante 7 sont assemblés et fixés d'une manière similaire à celle qui vient d'être décrite, la surface supérieure de la partie de stator 11 servant de surface de référence pour la partie inférieure de l'ensemble de stator 16.

Lorsque les deux ensembles de stator et les deux parties de rotor sont fixes dans leurs positions respectives, on fait passer du courant électrique dans les bobines 15 et 17 de manière à produire un échauffement des feuilles de plastique entourant ces bobines et à provoquer le retrait de ces feuilles des entrefers des deux ensembles de stator.

Au lieu d'utiliser une matière plastique thermorétractable on peut également utiliser une matière plastique apte à se dissoudre dans un solvant chimique adéquat que l'on introduit dans les entrefers pour obtenir l'élimination de la matière plastique à cet endroit, de sorte que les parties de rotor puissent tourner librement dans ces entrefers.

Pour réaliser un ajustement entre les deux phases d'un moteur diphasé, on effectue la fixation de l'ensemble de stator supérieur par rapport au support de stator une fois que la relation de phase par rapport à l'ensemble de stator inférieur a été déterminée, par exemple de la manière suivante. On fait tourner le rotor et on applique les tensions induites dans les bobines 15 et 17 à un phasemètre. On ajuste la position angulaire de l'ensemble de stator supérieur 16 pour amener les tensions induites en quadrature. On colle alors l'ensemble 16 définitivement dans le support de stator 4.

La figure 2 illustre une autre forme d'exécution qui se distingue de la precédente par les points suivants. Les deux ensembles de stator 209 et 216 ainsi que la paroi latérale du support de stator 204 présentent des ouvertures radiales 220, 221 et 222, respectivement. Ces ouvertures sont visibles dans la vue de dessus de la figure 3 qui représente une coupe selon la ligne III-III de la figure 2.

La feuille d'espacement annulaire 18 de la figure 1 est remplacée dans cette forme d'exécution par des parties de feuille, en forme de rubans, qui passent par les ouvertures 220, 221, 222 et peuvent être retirées vers l'extérieur lorsque les ensembles de stator et les parties de rotor ont été fixés. Ces rubans sont par exemple réalisés en un matériau appelé "mylar" (marque de fabrique) de façon à constituer un élément d'espacement d'épaisseur bien déterminée qui peut être aisément enlevé complètement du fait de la grande résistance mécanique de cette matière. Les parties de rotor annulaires reposent dans ce cas par exemple sur quatre points de référence correspondant à des ouvertures respectives dans les ensembles et le support de stator comme le montre la figure 3.

La partie de support de rotor 206 selon la figure 2 présente une paroi périphérique cylindrique 206' et une creusure annulaire 223 ouverte vers le haut. La paroi 206' comporte à la hauteur des parties de rotor annulaires des ouvertures radiales 224, 225 d'une section légèrement superieure à l'épaisseur des parties de rotor. Pour fixer les parties de rotor sur la partie de support, on remplit la creusure 223 d'une colle appropriée qui, lors d'un échauffement au moment de la fixation, passe par les ouvertures 224, 225 reparties le long de la périphérie de la partie de support et réalise un collage aisément contrôlable.

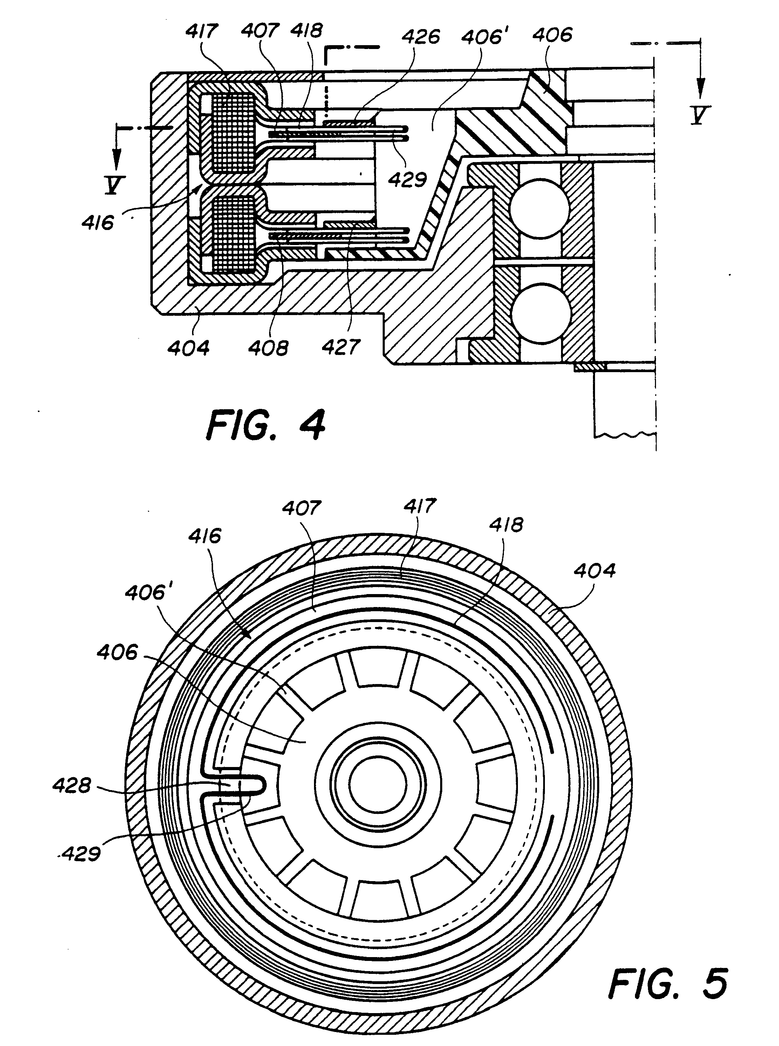

Les figures 4 et 5 illustrent une autre forme de réalisation du présent moteur qui présente une structure similaire à celle de la figure 1. Dans l'ensemble de la figure 4, une première partie de support 406 est similaire à la partie 6 de la figure 1 et présente une série de nervures 406' similaires aux nervures 6'. Des parties de rotor 407 et 408 sont collées sur des deuxièmes parties de support respectives 426, 427 qui se présentent sous forme de disques annulaires dont le diamètre intérieur correspond au diamètre extérieur de l'enveloppe cylindrique des nervures 406'. Les parties de rotor sont préalablement fixées sur ces rondelles de support 426, 427 qui seront elles fixées lors de l'assemblage du moteur sur la première partie de support 406. Chaque rondelle de support 426, 427 présente une ouverture radiale telle que 428 à un endroit situé entre deux nervures 406' consécutives.

L'exemple de la figure 4 montre l'utilisation, comme élément d'espacement correspondant à la feuille 18 ou au ruban de mylar 218, d'un fil métallique préformé, tel que 418, ayant une configuration essentiellement circulaire et étant dispose entre les crêtes des parties polaires de chacun des ensembles de stator et les parties de rotor respectives. La forme préférentielle de ce fil d'espacement est visible sur la figure 5. Ce fil présente une boucle 429 et est ouvert à un endroit diamétralement opposé à celle-ci. La boucle 429 est placée de façon à traverser l'ouverture radiale de la partie de support correspondante, telle que l'ouverture 428 de la partie 426, ce qui permet de retirer le fil en exerçant une traction sur la boucle à travers l'espace correspondant entre les nervures voisines de la partie de support 406. Le fil 418 est de préférence légèrement aimantable de sorte que, lors de l'assemblage, il peut être pose et est maintenu en place sur la partie de rotor ce qui facilite encore le procédé d'assemblage. Le diamètre des arcs de cercle formés par le fil est environ égal au diamètre moyen des parties polaires des ensembles de stator tels que 416.

Le procédé d'assemblage qui vient d'être décrit dans les exemples susmentionnés et qui utilise des éléments d'espacement entre les parties polaires et les parties de rotor, présente ; outre l'avantage du point de vue de la facilité de l'assemblage et de la précision de la hauteur des espaces d'air entre les parties qui coopèrent magnétiquement, l'avantage que l'entrefer total dans lequel se trouve une partie de rotor d'épaisseur donnée est fonction de cette épaisseur qui peut légèrement varier dans une fabrication en série. Or, l'augmentation de l'entrefer pour une plus grande épaisseur d'aimant compense en grande partie la variation de couple par ampère-tour qui se produirait avec un entrefer total constant, tel qu'il est obtenu par les procédés d'assemblage usuels.

## Revendications

1. Procédé de fabrication d'un moteur électrique synchrone comportant au moins une partie de rotor (8) de forme essentiellement annulaire plate, aimantée de façon à présenter au moins une série de pôles magnétiques disposés régulièrement le long d'une zone annulaire plane, ladite partie de rotor étant fixée par l'intermédiaire d'au moins une partie de support de rotor (6) sur un arbre (1) du moteur monté de façon rotative par rapport à au moins un ensemble de stator (9), l'ensemble de stator comportant au moins deux parties de stator (10, 11) en un matériau magnétiquement perméable formant, étant solidaires de ou étant couplées avec des parties polaires (13, 14) agencées de manière à former, dans leur ensemble, un entrefer variable le long d'au moins une portion d'un espace annulaire dans lequel sont disposés les pôles magnétiques de la partie de rotor, l'ensemble de stator comportant en outre au moins une bobine électrique de commande (15) couplée avec une ou plusieurs desdites parties polaires, caractérisé en ce que l'on assemble d'abord l'arbre du moteur (1) muni de la partie de support de rotor (6) avec un premier ensemble de parties polaires (14) devant être disposées en regard d'une zone annulaire plane correspondante de la partie de rotor (8) respective, de telle façon que les extrémités de ces parties polaires, dans le sens axial, soient disposées dans un plan perpendiculaire à l'axe de l'arbre du moteur, que l'on met en place la partie de rotor annulaire (8) en disposant au moins une pièce d'espacement (18, 218, 418) d'épaisseur déterminée entre celle-ci et les extrémités d'au moins une partie desdites parties polaires, que l'on fixe la partie de rotor (8) sur le support de rotor (6) et que l'on procède au retrait ou à l'enlèvement de la pièce d'espacement de l'espace entre la partie de rotor et lesdites parties polaires.

2. Procédé selon la revendication 1, caractérisé en ce que la pièce d'espacement est une feuille de matière plastique thermo-rétractable (18) et que le retrait de cette feuille est obtenu sous l'effet d'un échauffement du moteur.

3. Procédé selon la revendication 2, caractérisé en ce que l'échauffement est obtenu par le passage d'un courant électrique dans la bobine de commande (15) du moteur.

4. Procédé selon la revendication 1, caractérisé en ce que la pièce d'espacement est une feuille en une matière apte à être dissoute dans un solvant chimique et que l'on fait passer le solvant au moins dans l'espace entre la partie de rotor et les parties polaires.

5. Procédé selon la revendication 1, pour la fabrication d'un moteur dans lequel l'ensemble de stator (216) et/ou la partie de support de rotor (206) comportent au moins une ouverture d'accès (221, 222) communiquant avec l'espace d'air entre la partie de rotor et les parties polaires, cette ouverture étant accessible de l'extérieur de l'ensemble de stator assemblé avec l'arbre du moteur muni de la partie de rotor, caractérisé en ce que la pièce d'espacement (218) a la forme d'une portion de ruban passant par ladite ouverture d'accès de manière à permettre son enlèvement à travers cette ouverture.

6. Procédé selon la revendication 1, pour la fabrication d'un moteur dans lequel l'ensemble de stator (216) et/ou la partie de support de rotor (206) comportent au moins une ouverture d'accès (221, 222) communiquant avec l'espace d'air entre la partie de rotor et les parties polaires, cette ouverture étant accessible de l'extérieur de l'ensemble de stator assemblé avec l'arbre du moteur muni de la partie de rotor, caractérisé en ce que la pièce d'espacement (418) est un fil métallique de forme essentiellement circulaire, d'un diamètre approximativement égal au diamètre moyen de la zone annulaire aimantée de la partie de rotor (408), ce fil ayant deux extrémités libres et une partie passant par ladite ouverture d'accès, de manière à permettre l'enlèvement du fil à travers cette ouverture.

7. Procédé selon la revendication 6, caractérisé en ce que le fil d'espacement (418) est en une matière légèrement magnétique et présente deux extrémités libres rapprochées, la partie passant par ladite ouverture d'accès étant une boucle formée dans la partie continue du fil, et en ce que l'on place le fil d'espacement sur la partie de rotor annulaire (408) avant de poser cette dernière sur les extrémités des parties polaires correspondantes.

8. Procédé selon l'une des revendications 1 à 7, pour la fabrication d'un moteur dans lequel les parties de stator (10, 11) faisant partie d'un même circuit magnétique sont reliées entre elles, directement ou par l'intermédiaire d'une partie de culasse, de manière à former un joint magnétique constitué par des surfaces de contact parallèles à l'axe de l'arbre (1) du moteur, et dans lequel la partie de rotor (8) se présente sous forme d'un disque annulaire de faible épaisseur par rapport à son diamètre extérieur et est aimanté axialement, l'ensemble de stator comportant des parties polaires (13, 14) disposées de part et d'autre de la partie de rotor, caractérisé en ce que l'on dispose sur la face de la partie de rotor qui est opposée à la face comprenant ladite zone annulaire plane, une deuxième pièce d'espacement et que l'on place sur cette deuxième pièce d'espacement un deuxième ensemble de parties polaires, lesdits ensembles de parties polaires faisant partie respectivement de première et deuxième parties de stator, et que l'on fixe ces deux parties de stator l'une par rapport à l'autre de façon à former l'ensemble de stator correspondant.

9. Procédé selon la revendication 8, pour la fabrication d'un moteur qui comporte au moins deux parties de rotor coaxiales (7, 8), espacées axialement, fixées sur une même partie de support de rotor (6), ainsi qu'au moins deux ensembles de stator (9, 16) coopérant chacun avec une partie de rotor correspondante, caractérisé en ce que l'on dispose une première partie de stator du deuxième ensemble de stator (16) directement ou par l'intermédiaire d'une pièce d'espacement sur la deuxième partie de stator du premier ensemble de stator (9), ces dites parties de stator comportant chacune une surface de référence perpendiculaire à l'axe de l'arbre du moteur.

**Ansprüche**

1. Verfahren zur Herstellung eines elektrischen Synchronmotors, welcher mindestens einen Rotorteil (8) von im wesentlichen flacher Ringform aufweist, welcher derart magnetisiert ist, dass er mindestens eine Reihe von magnetischen Polen besitzt, die regelmässig entlang einer ebenen, ringförmigen Zone angeordnet sind, wobei dieser Rotorteil mit Hilfe mindestens eines Rotorträgerteils (6) auf einer drehbar in Bezug auf mindestens eine Statoreinheit (9) montierten Motorwelle (1) befestigt ist, die Statoreinheit zumindest zwei Statorteile (10, 11) aus einem magnetisch permeablen Material aufweist, die Polteile (13, 14) bilden, mit solchen ein Teil bilden oder mit solchen gekoppelt sind, welche Polteile so ausgebildet sind, dass sie als Ganzes einen entlang mindestens eines Teils eines ringförmigen Raumes, in dem die magnetischen Pole des Rotorteils angeordnet sind, veränderlichen Luftspalt bilden, und wobei die Statoreinheit ferner mindestens eine elektrische Steuerspule (15) aufweist, die mit einem oder mehreren der genannten Polteile gekoppelt ist, dadurch gekennzeichnet, dass zunächst die mit dem Rotorträgerteil (6) versehene Motorwelle (1) mit einer ersten Gruppe von Polteilen (14), die gegenüber einer entsprechenden, ringförmigen ebenen Zone des entsprechenden Rotorteils (8) anzuordnen sind, zusammengebaut wird, so dass die Enden dieser Polteile in Axialrichtung in einer zur Achse der Motorwelle senkrechten Ebene angeordnet sind, dass der ringförmige Rotorteil (8) in seine Lage gebracht wird, indem mindestens ein Distanzstück (18, 218, 418) von bestimmter Dicke zwischen diesem und den Enden mindestens eines Teils der genannten Polteile angeordnet wird, dass der Rotorteil (8) auf dem Rotorträgerteil (6) befestigt wird, und dass das Distanzstück aus dem Raum zwischen dem Rotorteil und den genannten Polteilen herausgezogen oder entfernt wird.

2. Verfahren nach Patentanspruch 1, dadurch gekennzeichnet, dass das Distanzstück eine Folie aus thermisch schrumpfbarem Kunststoff ist und das Entfernen dieser Folie unter der Wirkung einer Erwärmung des Motors erfolgt.

3. Verfahren nach Patentanspruch 2, dadurch gekennzeichnet, dass die Erwärmung durch einen elektrischen Stromfluss in der Steuerspule (15) des Motors bewirkt wird.

4. Verfahren nach Patentanspruch 1, dadurch gekennzeichnet, dass das Distanzstück eine Folie aus einem Material ist, das in einem chemischen Lösungsmittel auflösbar ist, und dass das Lösungsmittel mindestens in den Raum zwischen dem Rotorteil und den Polteilen eingebracht wird.

5. Verfahren nach Patentanspruch 1 zur Herstellung eines Motors, in dem die Statoreinheit (216) und-/oder der Rotorträgerteil (206) mindestens eine Zugangsöffnung (221, 222) aufweisen, welche mit dem Luftraum zwischen dem Rotorteil und den Polteilen in Verbindung steht, wobei diese Öffnung von ausserhalb der mit dem Rotorteil versehenen Motorwelle zusammengebauten Statoreinheit zugänglich ist, dadurch gekennzeichnet, dass das Distanzstück (218) die Form eines Bandteiles besitzt, welcher durch die genannte Zugangsöffnung hindurchgeführt ist, um sein Entfernen durch diese Öffnung zu gestatten.

6. Verfahren nach Patentanspruch 1 zur Herstellung eines Motors, in dem die Statoreinheit (216) und-/oder der Rotorträgerteil (206) mindestens eine Zugangsöffnung (221, 222) aufweisen, die mit dem Luftraum zwischen dem Rotorteil und den Polteilen in Verbindung steht, wobei diese Öffnung von ausserhalb der mit dem Rotorteil versehenen Motorwelle zusammengefügten Statoreinheit zugänglich ist, dadurch gekennzeichnet, dass das Distanzstück (418) ein Metalldraht von im wesentlichen kreisförmiger Gestalt ist, dessen Durchmesser näherungsweise gleich dem mittleren Durchmesser der magnetisierten, ringförmigen Zone des Rotorteils (408) ist, wobei dieser Draht zwei freie Enden und einen durch die genannte Zugangsöffnung tretenden Teil aufweist, derart, dass das Entfernen des Drahtes durch diese Öffnung ermöglicht wird.

7. Verfahren nach Patentanspruch 6, dadurch gekennzeichnet, dass der Distanzdraht (418) aus schwach magnetischem Material besteht und zweinahe beieinanderliegende freie Enden aufweist, dass der durch die genannte Zugangsöffnung tretende Teil eine in dem kontinuierlichen Teil des Drahtes gebildete Schleife ist, und dass der Distanzdraht auf den ringförmigen Rotorteil (408) gebracht wird, bevor dieser Rotorteil auf die Enden der entsprechenden Polteile gelegt wird.

8. Verfahren nach einem der Patentansprüche 1 bis 7 zur Herstellung eines Motors, in dem die zu einem gleichen magnetischen Kreis gehörenden Statorteile (10, 11) direkt oder über ein Jochteil miteinander verbunden sind, so dass ein magnetischer Schluss durch zur Achse der Motorwelle (1) parallele Kontaktflächen gebildet wird, und in dem der Rotorteil (8) die Form einer ringförmigen Scheibe von im Verhältnis zu ihrem Aussendurchmesser geringer Dicke aufweist und axial magnetisiert ist, wobei die Statoreinheit Polteile (13,14) aufweist, die zu beiden Seiten des Rotorteils angeordnet sind, dadurch gekennzeichnet, dass auf die Fläche des Rotorteils, welche der die genannte ebene, ringförmige Zone enthaltenden Fläche gegenüber liegt, ein zweites Distanzstück gebracht wird, und dass auf diesem zweiten Distanzstück eine zweite Gruppe von Polteilen angeordnet wird, wobei die genannten Gruppen von Polteilen jeweils Teil eines ersten und eines zweiten Statorteils sind, und dass diese beiden Statorteile untereinander fest verbunden werden, um die entsprechende Statoreinheit herzustellen.

9. Verfahren nach Patentanspruch 8 zur Herstellung eines Motors, der mindestens zwei koaxiale, axial voneinander entfernte Rotorteile (7,8) aufweist, die auf einem selben Rotorträgerteil (6) befestigt sind, sowie mindestens zwei Statoreinheiten (9,16), die jeweils mit einem entsprechenden Rotorteil zusammenwirken, dadurch gekennzeichnet, dass ein erster Statorteil der zweiten Statoreinheit (16) direkt oder über ein Distanzstück auf dem zweiten Statorteil der ersten Statoreinheit (9) angeordnet wird, wobei diese genannten Statorteile jeweils eine zur Achse der Motorwelle senkrechte Bezugsfläche besitzen.

## Claims

1. Method of manufacturing a synchronous electric motor comprising at least one rotor part (8) of substantially annular flat shape, magnetized so as to present at least one series of magnetic poles arranged regularly along a plane annular zone, said rotor part being fixed by means of at least one rotor-supporting part (6) to a shaft (1) of the motor mounted so as to be rotable with respect to at least one stator assembly (9), the stator assembly comprising at least two stator parts (10, 11) of a magnetically permeable material constituting, being integral with or being coupled with pole parts (13, 14) arranged in such manner as to form, in their assembly, a variable airgap along at least a portion of an annular space in which the magnetic poles of the rotor part are arranged, the stator assembly further comprising at least one electric control coil (15) coupled with one or more of said pole parts, characterized in that first the motor shaft (1) fitted with the rotor-supporting part (6) is assembled with a first assembly of pole parts (14) which are to be arranged facing a corresponding plane annular zone of the respective rotor part (8), in such manner that the ends of these pole parts, in the axial direction, are arranged in a plane perpendicular to the axis of the motor, that the annular rotor part (8) is placed in position by disposing at least one spacer part (18, 218, 418) of determined thickness between the rotor part and the ends of at least one portion of the said pole parts, that the rotor part (8) is fixed on the rotor-supporting part (6) and that the spacer part is withdrawn or removed from the space between the rotor part and the said pole parts.

2. Method according to claim 1, characterized in that the spacer part is a sheet of heat retractable plastic material (18) and that the withdrawal of this sheet is obtained under the effect of a heating of the motor.

3. Method according to claim 2, characterized in that the heating is obtained by the flow of an electric current in the control coil (15) of the motor.

4. Method according to claim 1, characterized in that the spacer part is a sheet of a material capable of being dissolved in a chemical solvent and that the solvent is caused to pass at least into the space between the rotor part and the pole parts.

5. Method according to claim 1 for the manufacturing of a motor in which the stator assembly (216) and/or the rotor supporting part (206) comprise at least one access opening (221, 222) communicating with the air space between the rotor part and the pole parts, this opening being accessible from outside of the stator assembly assembled with the motor shaft provided with the rotor part, characterized in that the spacer part (418) is a metallic wire of substantially circular shape having a diameter approximately equal to the mean diameter of the magnetized annular zone of the rotor part (408), this wire having two free ends and a portion passing through the said access opening, so as to permit the removal of the wire through this opening.

6. Method according to claim 1 for the manufacturing of a motor in which the stator assembly (216) and/or the rotor supporting part (206) comprise at least one access opening (221, 222) communicating with the air space between the rotor part and the pole parts, this opening being accessible from outside of the stator assembly assembled with the motor shaft provided with the rotor part, characterized in that the spacer part (418) is a mettallic wire of substantially circular shape having a diameter approximately equal to the mean diameter of the magnetized annular zone of the rotor part (408), this wire having two free ends and a portion passing through the said access opening, so as to permit the removal of the wire through this opening.

7. Method according to claim 6, characterized in that the spacer wire (418) is made of a slightly magnetic material and has two free ends close to each other, the portion passing through said access opening being a loop formed in the continuous part of the wire, and in that the spacer wire is placed on the annular rotor part (408) before this latter is placed on the ends of the corresponding pole parts.

8. Method according to one of claims 1 to 7 for the manufacturing of a motor in which the stator parts (10, 11) forming part of a same magnetic circuit are connected to one another, directly or by means of a yoke part, so as to form a magnetic joint constituted by contact surfaces parallel to the axis of the motor shaft (1), and in which the the rotor part (8) is in the form of an annular disc of small thickness as compared with its outer diameter and is magnetized axially, the stator assembly comprising pole parts (13, 14) arranged on either side of the rotor part, characterized in that a second spacer part is placed on the face of the rotor part which is opposite to the face comprising said plane annular zone, and that a second assembly of pole parts is placed on this second spacer part, the said assemblies of pole parts respectively being part of first and second stator parts, and that these two stator parts are fixed relatively to one another, so as to form the corresponding stator assembly.

9. Method according to claim 8 for manufacturing a motor which comprises at least two coaxial axially spaced rotor parts (7, 8) fixed on a same rotor-supporting part (6) as well as at least two stator assemblies (9, 16), cooperating each with a corresponding rotor part, characterized in that a first stator part of the second stator assembly (16) is placed directly, or through a spacer part, on the second stator part of the first stator assembly (9), these said stator parts each comprising a reference surface perpendicular to the axis of the motor shaft.

FIG. 1

FIG. 2

FIG. 3

FIG. 4

FIG. 5